(19) **Europäisches Patentamt**
**European Patent Office**
**Office européen des brevets**

(11) **EP 3 537 244 B1**

(12) **EUROPÄISCHE PATENTSCHRIFT**

(45) Veröffentlichungstag und Bekanntmachung des Hinweises auf die Patenterteilung:
**04.02.2026  Patentblatt 2026/06**

(51) Internationale Patentklassifikation (IPC):
**G05B 19/042** (2006.01)    **G05B 9/02** (2006.01)

(52) Gemeinsame Patentklassifikation (CPC):
**G05B 9/02; G05B 19/042**

(21) Anmeldenummer: **19162727.2**

(22) Anmeldetag: **20.12.2017**

(54) **REGELUNGSVERFAHREN FÜR EIN ELEKTROPNEUMATISCHES FELDGERÄT**

REGULATION METHOD FOR AN ELECTRO-PNEUMATIC FIELD DEVICE

PROCÉDÉ DE RÉGULATION POUR UN APPAREIL DE TERRAIN ÉLECTROPNEUMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2016  DE 102016125643**

(43) Veröffentlichungstag der Anmeldung:
**11.09.2019  Patentblatt 2019/37**

(62) Dokumentnummer(n) der früheren Anmeldung(en) nach Art. 76 EPÜ:
**17208728.0 / 3 339 992**

(73) Patentinhaber: **Samson Aktiengesellschaft**
**60314 Frankfurt am Main (DE)**

(72) Erfinder: **Wagner-Stürz, David**
**64356 Mühltal (DE)**

(74) Vertreter: **Schmid, Nils T.F.**
**SKM-IP PartGmbB**
**Oberanger 45**
**80331 München (DE)**

(56) Entgegenhaltungen:
**CA-A1- 2 589 386    DE-A1- 19 921 828**

**Beschreibung**

Die Erfindung betrifft ein Regelungsverfahren für ein elektropneumatisches Feldgerät einer prozesstechnischen Anlage, wie eine chemische Anlage, beispielsweise eine petrochemische Anlage, eine Lebensmittel verarbeitende Anlage, beispielsweise eine Brauerei, ein Kraftwerk oder dergleichen. Typische elektropneumatische Feldgeräte umfassen einen pneumatischen Stellantrieb zum Betätigen eines Stellglieds, wie ein Stellventil, einen elektropneumatischen Wandler zum Erzeugen eines pneumatischen Stellsignals für den pneumatischen Stellantrieb und eine Regelungselektronik mit einem elektrischen Sollwerteingang für eine Leitgröße von einem übergeordneten Regelungssystem, beispielsweise einer Leitwarte, zur Vorgabe eines Sollwerts und einem elektrischen Ausgang für eine Stellgröße zum Ansteuern des elektropneumatischen Wandlers. Der pneumatische Stellantrieb kann beispielsweise durch eine Stellstange zum Übertragen einer translatorischen Stellbewegung mit einem Ventilglied eines Stellventils verbunden sein oder, falls es sich um einen rotatorischen Stellantrieb handelt, über eine Stellwelle zum Übertragen einer rotatorischen Stellbewegung. Ein elektropneumatischer Wandler zum Erzeugen eines pneumatischen Stellsignals kann einen Stelldruck von beispielsweise 1 bar bis 20 bar, insbesondere 1 bar bis 6 bar oder 1 bar bis 10 bar, für eine pneumatische Antriebskammer eines pneumatischen Stellantriebs bereitstellen. Pneumatische Stellantriebe können beispielsweise einfachwirkend mit Federrückstellung oder zweifachwirkend mit zwei gegeneinander wirkenden pneumatischen Arbeitskammern ausgestaltet sein.

Von DE 199 21 828 A1 sind ein Verfahren zum Betreiben eines Stellungsreglers und ein dieses Verfahren anwendender Stellungsregler bekannt. Bei dem bekannten Verfahren hat der Stellungsregler einen ersten Eingang für eine Eingangsgröße W zum Vorgeben eines Sollwertes, einen zweiten Eingang für eine Regelgröße X und einen Ausgang für eine Stellgröße Y. Der Stellungsregler umfasst ferner eine Regelungseinheit, die in Abhängigkeit von der Eingangsgröße W und der Regelgröße X ein erstes Ausgangssignal zur Bildung der Stellgröße Y erzeugt. Der bekannte Stellungsregler verfügt über eine Fehlererkennungseinrichtung, die erkennt, ob die Regelgröße X einen nicht betriebsgemäßen Zustand eingenommen hat und der bei einem solchen nicht betriebsgemäßen Zustand ein Fehlersignal erzeugt. Das Fehlersignal wirkt auf eine Umschalteinheit, die die Regeleinheit inaktivieren kann und eine Steuerungseinheit aktivieren kann. Die Steuereinheit kann dazu vorgesehen sein, ein einer Eingangsgröße W zugeordnetes zweites Ausgangssignal zur Bildung einer Stellgröße Y bereitzustellen. So erzeugt die Steuerungseinheit ein Ausgangssignal, das beispielsweise linear von der Eingangsgröße abhängig sein kann. Die Abhängigkeit des Ausgangssignals von einer Regelgröße kann bei einer Initialisierung des Stellungsreglers anhand des Ermittelns eines Zusammenhangs zwischen einer Stellgröße und der Eingangsgröße ermittelt werden, welcher in einer Speichereinheit der Steuerungseinheit gespeichert sein kann.

DE 199 21 828 A1 beschreibt, dass die Regelgröße X beispielsweise ein von einem Wegaufnehmer einer Stellstange eines pneumatischen Stellantriebs erfasstes Positionssignal ist, welches besonders fehleranfällig ist infolge des üblichen Verschleißes bei typischen Wegaufnehmern, die als Leitplaste realisiert sind. Der bekannte Stellungsregler gewährleistet im Falle eins nicht betriebsgemäßen Zustandes der Positionsmessgröße bzw. Regelgröße X eine aber weiterhin jedoch stets sichere Betriebsweise. Der Stellungsregler gemäß DE 199 21 828 A1 eignet sich bei langsam veränderlichen Prozessen und Prozesse mit nur geringen Störungen dazu, das Signal der Stellgröße so einzustellen, dass die Ist-Ventilstellung nahe ihres Sollwertes gehalten werden kann. Dies erhöht die Betriebssicherheit einer prozesstechnischen Anlage, die mit einem solchen Stellungsregler ausgestattet ist, und vermeidet es, wie zuvor notwendig, bei Ausfall des Signals der Regelgröße einen Stellungsregler sofort dazu zu veranlassen, das Stellventil in einen sicheren Not-Aus-Zustand zu bringen. Für mittelschnell bis schnell veränderliche Prozesse oder solche mit deutlichen Störungen eignet sich der bekannte Stellungsregler nur eingeschränkt.

CA 2 589 386 A1 offenbart ein Verfahren zum Sammeln von Sensordaten in einem Prozesssteuerungssystem mit einem Regler und einer Vielzahl an Sensoren.

Es ist eine Aufgabe der Erfindung, die Nachteile des Standes der Technik zu überwinden und insbesondere ein Regelungsverfahren bereitzustellen, das bei Ausfall einer Regelgröße eine verbesserte Notbetätigung eines pneumatischen Stellantriebs gestattet.

Diese Aufgabe wird gelöst durch die Gegenstände der unabhängigen Ansprüche.

Danach ist ein Regelungsverfahren für ein elektropneumatisches Feldgerät vorgesehen. Das elektropneumatische Feldgerät umfasst einen elektropneumatischen Stellantrieb zum Betätigen eines Stellglieds, wie eines Stellventils, einen elektropneumatischen Wandler zum Erzeugen eines pneumatischen Stellsignals für den pneumatischen Stellantrieb und eine Regelungselektronik mit einem elektrischen Sollwert-Eingang für eine Leitgröße zur Vorgabe eines Sollwerts, insbesondere von einer Leitwarte, und mit einem elektrischen Ausgang für eine Stellgröße zum Ansteuern des elektropneumatischen Wandlers. Das elektropneumatische Feldgerät kann zum Einstellen einer Prozessfluidströmung einer prozesstechnischen Anlage vorgesehen sein, beispielsweise eine chemische Anlage, wie eine petrochemische Anlage, eine Lebensmittel verarbeitende Anlage, wie eine Brauerei, ein Kraftwerk oder dergleichen. Als Stellglieder kommen insbesondere translatorische oder rotatorische Stellventile mit entsprechendem Stellantrieb in Betracht. Der Stellantrieb kann auf das Stellglied eine Bewegung über eine Stellstange oder Stellwelle übertragen. Als elektropneumatische Wandler kommt insbesondere ein I/P-Wandler in Betracht, der abhängig von einem Eingangsstrom und einem Versorgungsdruck von beispielsweise 10 bar einen Ausgangsdruck von beispielsweise zwischen 1 bar und 6 bar bereitstellen kann. Ein elektropneumatischer Wandler kann ein Vorsteuerventil und einen pneumatischen Verstärker umfassen, um einen erhöhten Volumenstrom bereitstellen zu können. Eine Regelungselektronik kann digital oder analog oder in einer Mischbauweise realisiert sein. Die Leitgröße, welche insbesondere von einer Leitwarte der prozesstechnischen Anlage stammen kann, kann beispielsweise ein 4..20 mA-Signal oder dergleichen sein. Als Stellgrößen zum Ansteuern eines elektropneumatischen Wandlers kann beispielsweise eine pulsweitenmoduliertes Strom- oder Spannungssignal vorgesehen sein oder ein 4..20 mA-Signal. Die Stellgröße zum Ansteuern des elektropneumatischen Wandlers wird über eine Kommunikationsverbindung von der Regelungselektronik an den elektropneumatischen Wandler übergeben.

Bei dem erfindungsgemäßen Regelungsverfahren wird die Stellgröße in einem vorbestimmten Betriebszustand des Feldgeräts, wie einem Notlauf-Regelungszustand bestimmt durch einen Regelungsalgorithmus basierend auf der Leitgröße und einer anderen Regelgröße als dem Stellglied-Positions-Ist-Messwert. Bei prozesstechnischen Anlagen bzw. elektropneumatischen Feldgeräten werden oftmals unterschiedliche Ist-Messwerte insbesondere im Bereich des Feldgeräts erfasst. Es hat sich herausgestellt, dass eine Notlauf-Regelung einer bloßen Notlauf-Steuerung im Falle eines Totalausfalls des Stellgeräts gegenüber zu bevorzugen ist, da eine deutlich höhere Regelungsqualität erreicht werden kann als mit einer bloßen Steuerung ohne Rückkopplung.

Die Erfinder haben herausgefunden, dass bei einem Ausfall eines Positions-Ist-Messwerts an dessen Stelle andere Messwerte als Regelgröße herangezogen werden können, um mit einem Regelungsalgorithmus die Stellgröße zu bestimmen. Die Verwendung eines anderen Ist-Messwerts als der Stellglied-Positions-Ist-Messwert als Regelgröße gestattet es dem erfindungsgemäßen Regelungsverfahren ungeachtet eines Ausfalls des Stellglied-Positions-Ist-Messwerts dennoch eine Regelung basierend auf einem Sollwert (der Leitgröße)-Istwert (der anderen Regelgröße)-Vergleich vorzunehmen und auf dessen Grundlage eine stabile Regelung durchzuführen. Als Regelungsalgorithmus kommt beispielsweise eine P-Regelung, eine PI-Regelung, eine PID-Regelung, eine PD-Regelung oder dergleichen in Betracht.

Gemäß einer bevorzugten Ausführung der Erfindung wird in dem vorbestimmten Betriebszustand, vorzugsweise dem Notlauf-Regelungszustand, die Stellgröße bestimmt durch einen Regelungsalgorithmus basierend auf der Leitgröße sowie einer stelldruckbezogenen Regelgröße und/oder einer stellkraftbezogenen Regelgröße. Als stelldruckbezogene Regelgröße können Ist-Messwerte herangezogen werden, die sich auf den Stelldruck bzw. das Pneumatikfluid zum Bereitstellen des Stelldrucks an dem pneumatischen Stellantrieb beziehen. Beispielsweise kann eine stelldruckbezogene Regelgröße ein Stelldruck-Ist-Messwert sein, der in dem Stellantrieb erfasst wird. Eine stelldruckbezogene Regelgröße kann auch ein Stelldruck-Ist-Messwert sein, der in der Versorgungsleitung des pneumatischen Stellantriebs von dem pneumatischen Stellantrieb erfasst wird. Eine stelldruckbezogene Regelgröße kann ferner beispielsweise der Stelldruck-Ist-Messwert gemessen am Ausgang eines elektropneumatischen Wandlers, insbesondere eines Solenoidventils oder Versteuerventils, sein. Falls der elektropneumatische Wandler über eine Verstärkereinheit, vorzugsweise eine pneumatische Verstärkereinheit, verfügt, kann als stelldruckbezogene Regelgröße der Stelldruck-Ist-Messwert am Eingang oder am Ausgang dieses Pneumatikverstärkers herangezogen werden. Bei einem Pneumatikverstärker, der über eine Positionserfassung hinsichtlich des Verstärkerkolbens verfügt, kann als stelldruckbezogene Regelgröße auch ein Pneumatikverstärker-Kolben-Positions-Ist-Messwert herangezogen werden.

Alternativ oder zusätzlich zu einer stelldruckbezogenen Regelgröße kann eine stellkraftbezogene Regelgröße de Regelungsalgorithmus in dem vorbestimmten Betriebszustand, vorzugsweise dem Notlauf-Regelungszustand, zur Verfügung gestellt werden. Eine stellkraftbezogene Regelgröße ist ein Ist-Messwert, welcher sich auf die Kraftübertragung zwischen dem Stellantrieb und dem Stellglied bezieht. Es sei klar, dass der Begriff Kraft vorliegend im Allgemeinen auch Drehmomente mit einbezieht. Als stellkraftbezogene Regelgröße kann beispielswiese ein Spannungs- und/oder Dehnungs-Ist-Messwert einer Rückstellfeder des pneumatischen Stellantriebs dienen, falls der pneumatische Stellantrieb ein einfachwirkender pneumatischer Antrieb mit Rückstellfeder ist. Als stellkraftbezogene Regelgröße kann ein Spannungs- und/oder Dehnungs-Ist-Messwert einer Antriebsstange oder -welle des pneumatischen Stellantriebs dienen. Unabhängig davon, ob in dem vorbestimmten Betriebszustand dem Regelungsalgorithmus außer dem Leitwert eine stelldruckbezogene Regelgröße, eine stellkraftbezogene Regelgröße oder sowohl eine stelldruck- als auch eine stellkraftbezogene Regelgröße zugrunde gelegt wird, ist sichergestellt, dass in dem vorbestimmten Betriebszustand des Feldgeräts ein Regelkreis realisiert ist, der eine mittelbare Regelung zur Stellglied-Einstellung erlaubt, obgleich kein Stellglied-Positions-Ist-Messwert erfasst wird. Es hat sich herausgestellt, dass eine solch mittelbare Regelung über eine andere Regelgröße als die eigentliche Regelgröße, den Stellglied-Positions-Ist-Messwert, es erlaubt, selbst bei einem Ausfall einer Positionssensorik eine Regelungsqualität hoher Güte bereitzustellen. Besonders bei sicherheitskritischen prozesstechnischen Anlagen oder prozesstechnischen Anlagen, bei denen der Ausfall eines Feldgerätes zu erheblichen ökonomischen Einbußen führen kann, beispielsweise in der Lebensmittelindustrie, wenn beim Ausfall eines Prozesses Rohstoffe in großem Umfang verderben können, hat es sich als sehr vorteilhaft erwiesen, beim Ausfall der primären Regelgröße auf eine sekundäre Regelgröße ausweichen zu können.

Gemäß einer anderen bevorzugten Ausführung der Erfindung, die mit der vorherigen kombinierbar ist, wird in dem vorbestimmten Betriebszustand die Stellgröße bestimmt durch einen Regelungsalgorithmus basierend auf der Leitgröße und einer prozessfluidbezogenen Regelgröße. Als prozessfluidbezogene Regelgröße kann beispielsweise ein bezogen auf das Stellglied stromaufwärtiger Druck und/oder stromabwärtiger Druck, eine Prozessfluid-Strömungsgeschwindigkeit, insbesondere stromauf und/oder stromab des Stellglieds, oder ein Geräusch am Stellglied herangezogen werden. Insbesondere ein Kavitationsgeräusch am Stellglied kann als Indikator für eine Öffnungs-Stellung oder eine Ist-Durchflussmenge dienen, die einer Regelung der Stellgliedpositionierung mittelbar zugrunde gelegt werden kann.

Übliche Regelungsalgorithmen basieren auf einem Sollwert-Istwert-Vergleich einer einzigen Leitgröße mit einer einzigen Regelgröße. Es kann vorteilhaft sein, bei Ausfall einer primären Regelgröße an deren Stelle mehrere sekundäre Regelgrößen als Istwert-Grundlage einer Sollwert-Istwert-Vergleichs gegenüber einer Sollwert-Leitgröße zu verwenden.

Stelldruckbezogene Regelgrößen und/oder stellkraftbezogene Regelgrößen realisieren im Allgemeinen Einflussfaktoren auf den primären Regelgrößen-Stellglied-Positionswert. Eine prozessfluidbezogene Regelgröße ist in der Regel eine von dem primären Regelgrößen-Stellglied-Positionswert beeinflusste Größe. Für eine präzise Regelung in dem vorbestimmten Betriebszustand, vorzugsweise einem Notlauf-Regelungszustand, kann es von Vorteil sein, sowohl eine Einflussgröße, wie eine stellkraft- und/oder stelldruckbezogene Regelgröße als auch eine beeinflusste Größe, wie eine prozessfluidbezogene Regelgröße zu berücksichtigen. Auf diese Weise kann der Stellantrieb angesteuert werden durch die Regelungselektronik auf der Grundlage von Regelgrößen bzw. Ist-Messwerten, um eine sehr präzise wenngleich mittelbare Regelung der Stellglied-Ist-Position sicherstellen.

Gemäß einer bevorzugten Ausführung der Erfindung, die mit den vorherigen kombinierbar ist, wird eine Reihe von vorbestimmten Regelgröße-Messwerten, insbesondere eine Reihe von stelldruckbezogenen, stellkraftbezogenen oder prozessfluidbezogenen Regelgrößen, je einem Stellglied-Positionsmesswert zugeordnet. Die Zuordnung kann in einem Normal-Betriebszustand erfolgen, in dem der Stellglied-Positions-Ist-Messwert ordnungsgemäß erfasst wird. Beispielsweise kann die Zuordnung von Regelgröße-Messwerten zu je einem erfassten Stellglied-Positions-Ist-Messwert während einer Initialisierungsphase beispielsweise beim erstmaligen Aktivieren des elektropneumatischen Feldgeräts erfolgen. In dem vorbestimmten Betriebszustand, beispielsweise dem Notlauf-Regelzustand, wird abhängig von den durch einen Sensor des Feldgeräts erfassten Regelgrößen-Ist-Messwerten der zuvor zugeordnete Stellglied-Positionsmesswerts anstelle des Stellglied-Positionsmesswerts einem Regelungsalgorithmus bereitgestellt, der dazu eingerichtet ist, die Stellgröße basierend auf der Leitgröße und dem Stellglied-Positions-Ist-Messwert zu bestimmen. Dabei wird der tatsächlich erfasste Regelgrößen-Ist-Messwert einer anderen Regelgröße als einer Stellgliedposition in einen zuvor bestimmten, dem Regelgrößen-Ist-Messwert zugeordneten simulierten Stellglied-Positions-Wert übersetzt. Die andere Regelgröße wird also zu Regelzwecken übersetzt in einen zuvor als entsprechend festgestellten und daher zugeordneten Stellglied-Positionsmesswert, welcher dann als simulierter Positions-Ist-Wert dem Regelungsalgorithmus bereitgestellt wird. Der Regelungsalgorithmus wird unter Berücksichtigung der Leitgröße die Stellgröße bestimmen. Eine derartige Notlauf-Regelung kann in solchen Fällen von Vorteil sein, in denen eine verlässliche Korrelation zwischen Stellglied-Positionsmesswert und Messwert wenigstens einer anderen Regelgröße gegeben ist. Dies bietet den Vorteil, dass derselbe Regelungsalgorithmus welcher bei dem Normalbetrieb des Feldgeräts verwendet wird unverändert auch in dem vorbestimmten Betriebszustand, beispielsweise einem Notlauf-Betriebszustand, verwendet werden kann.

Bei einer bevorzugten Weiterbildung der Erfindung wird die Reihe von vorbestimmten Regelgröße-Messwerten je einem Stellglied-Positions-Messwert als Kennlinie, ventilcharakteristische Funktion, Werteschar, Korrelationsfunktion oder dergleichen zugeordnet. Auf Basis einer ventilcharakteristischen Funktion, wie eine Korrelationsfunktion, die beispielsweise bei Initialisierung des Stellgeräts definiert werden kann, kann die Regelungselektronik in dem vorbestimmten Betriebszustand eine einfache mathematische Operation zur Übersetzung bzw. Umwandlung eines tatsächlichen Regelgrößen-Ist-Messwerts in einen dem Regelungsalgorithmus zugrunde zu legenden, simulierten Stellglied-Positionsmesswert, welcher dem Regelgrößen-Ist-Messwert zugeordnet ist, vornehmen. Auf Basis einer Werteschar kann der gemessene Regelgrößen-Ist-Messwert approximativ (einem nächstkommenden) oder iterativ (beispielsweise als Mittelwert zwischen zwei nächstkommenden) Stellglied-Positionsmesswerten zugeordnet werden.

Gemäß einer Weiterbildung der Erfindung, die mit den vorherigen kombinierbar ist, kann eine Zuordnung von Stellglied-Positionsmesswerten zu der Reihe von vorbestimmten Regelgröße-Messwerten aktualisiert werden, beispielsweise beim Initialisierungsvorgang des Feldgerätes und/oder insbesondere während des Betriebs des Feldgeräts, vorzugsweise wiederholt während eines vorbestimmten Zeitabschnitts. Bevorzugt wird die Zuordnung maßgeblich bei einem Initialisierungsvorgang des Feldgerätes definiert. Anschließende Aktualisierungen während des Betriebs des Feldgeräts können verwendet werden, um zu überprüfen, ob die vorgenommene Zuordnung bei dem aktuellen Ist-Betriebszustand weiterhin zutreffend ist. Sie können gegebenenfalls verschleißbedingten Änderungen Rechnung tragen. Bei wiederholter Zuordnung kann insbesondere eine Zuordnungs-Mittelwertbildung durchgeführt werden. Einer Mittelwertbildung kann entweder jede einzelne Zuordnung zugrunde gelegt werden, wobei die Mittelwertbildung anhand einer Gewichtung vorgenommen werden kann, bei der insbesondere der bei Initialisierung definierten Zuordnung eine höhere Gewichtung als den anschließend vorgenommenen Zuordnungen zugeteilt werden kann.

Gemäß einer speziellen Ausführung der Erfindung wird als die andere Regelgröße der Positionsmesswert bezüglich des Pneumatikverstärkerkolbens verwendet. Bei dieser bevorzugten Ausführung der Erfindung wird ferner eine Vergleichsgröße, insbesondere ein Schwellenwert, vordefiniert. Als Vergleichsgröße kommt insbesondere ein Wert in Betracht, der in der Mitte des Bereichs der zu erwartenden Leitgröße liegt, insbesondere der Mittelwert möglicher Leitgrößen. Falls die Leitgröße ein 4..20 mA-Signal ist, kann beispielsweise die Vergleichsgröße als 12 mA vordefiniert werden. Indem die Vergleichsgröße entsprechend etwa 50 % der zu erwartenden Leitgröße definiert wird, ist eine Notlauf-Regelung bereitgestellt, bei der im Wesentlichen der gleiche Stellbereich für Be- und Entlüften bei einer Ansteuerung durch den überlagerten Regelkreis, beispielsweise ausgehend von der Leitwarte, bereitgestellt ist. Andere Vergleichsgrößen, beispielsweise 8 mA und/oder 16 mA, welche das untere Viertel bzw. das obere Viertel der zu erwartenden Leitgröße begrenzen, können ebenfalls als Vergleichsgröße definiert sein. Bei dem bevorzugten Regelungsverfahren wird die Stellgröße derart eingestellt, dass der Pneumatikverstärkerkolben sich in Richtung 0 %-iger Pneumatikverstärker-Öffnung bewegt, falls die Leitgröße kleiner als die Vergleichsgröße ist. Die Stellgröße kann derart eingestellt werden, dass der Pneumatikverstärkerkolben sich in Richtung 100 %-iger Verstärker-Öffnung bewegt, falls die Leitgröße größer als die Vergleichsgröße ist. Alternativ oder zusätzlich kann die Stellgröße derart eingestellt werden, dass der Pneumatikverstärkerkolben stillsteht, falls die Leitgröße der Vergleichsgröße entspricht oder zumindest im Wesentlichen entspricht. Es ist durchaus denkbar, dass ein Toleranzband von beispielsweise $\pm$ 1 % oder $\pm$ 2 % um die Vergleichsgröße vorgesehen ist, um die Notlauf-Regelung zu stabilisieren. Ein pneumatischer Volumenstromverstärker hat einen einstellbaren $K_{VS}$ Wert, wobei in dem vorbestimmten Betriebszustand, vorzugsweise dem Notlaufbetrieb, der $K_{VS}$ im Vergleich zum Normalbetrieb Wert reduziert wird. Ein verringerter $K_{VS}$ Wert führt zu einer erhöhten Verfahrensstabilität. Der $K_{VS}$ Wert bestimmt sich bei einem Versorgungsdruck von 10 bar und einem Stelldruck von 2,4 bar anhand des messbaren Luftdurchflusses Q durch den Volumenstromverstärker mit der Formel:

$$Q = K_{VS} * 36{,}22 \text{ m}^3/\text{h}.$$

Es sei klar, dass bei einem Feldgerät mit erfindungsgemäßem Regelungsverfahren unterschiedliche Betriebszustände vorbestimmt sein können, insbesondere unterschiedliche Notlauf-Regelungszustände. Beispielsweise kann ein erster Notlauf-Regelungsbetriebszustand für eine Regelung auf Basis einer stelldruckspezifischen Regelgröße vordefiniert sein, ein zweiter Notlauf-Betriebszustand für eine Regelung mit Hilfe einer stellkraftspezifischen Regelgröße und ein dritter vorbestimmter Notlauf-Betriebszustand für eine Regelung auf Basis einer prozessfluidspezifischen Regelgröße. Es sind auch vorbestimmte Betriebszustände, insbesondere Notlauf-Regelbetriebszustände denkbar, die derart vorbestimmt sind, dass eine Kombination aus mehreren sich von dem Stellglied-Positions-Ist-Messwert unterscheidenden Regelgrößen berücksichtigt wird.

Die Erfindung betrifft auch ein Regelungsverfahren für ein elektropneumatisches Feldgerät wie oben beschrieben, wobei in einem Normalbetriebszustand des Feldgeräts die Stellgröße bestimmt wird durch einen Regelungsalgorithmus basierend auf der Leitgröße und dem Stellglied-Positions-Ist-Messwert. Bei dem Regelungsverfahren kann eine Umschaltung in einen der vorbestimmten Betriebszustände, insbesondere den Notlauf-Regelungszustand erfolgen. Einem mit einem solchen Regelungsverfahren ausgestalteten elektropneumatischen Feldgerät ist es möglich, aus einem Normalbetriebszustand wahlweise, zu Testzwecken oder bei einem Fehlerzustand, eine Umschaltung durchzuführen, um anstelle des Regelungsalgorithmus des Normalbetriebszustands einen anderen Regelungsalgorithmus durchzuführen.

Gemäß einer bevorzugten Ausführung eines erfindungsgemäßen Regelungsverfahrens erfolgt die Umschaltung dann, wenn ein nicht betriebsgemäßer Zustand, insbesondere eines Sensors zum Erfassen einer Regelgröße festgestellt wird, vorzugsweise dem Sensor zum Erfassen des Stellglied-Positions-Ist-Messwerts. Der Stellungssensor oder Positionssensor zum Erfassen des Stellglied-Positions-Ist-Messwerts ist erfahrungsgemäß besonders fehleranfällig infolge seiner ständigen Bewegung und dem damit einhergehenden Verschleiß.

Bei einer bevorzugten Ausführung eines erfindungsgemäßen Regelungsverfahrens erfolgt eine Umschaltung in einen anderen Notlauf-Regelzustand dann, wenn ein nicht betriebsgemäßer Zustand der anderen Regelgröße als dem Stellglied-Positions-Ist-Messwert festgestellt wird. Bei einem solchen Regelungsverfahren kann nach einer ersten insbesondere positionssensorbedingten Umschaltung von dem Normalbetriebszustand in einen ersten vorbestimmten NotlaufRegelungszustand eine zweite Umschaltung von dem ersten Notlauf-Regelungszustand in einen zweiten Notlauf-Regelungszustand erfolgen. Wenn beispielsweise nach dem Ausfall des Stellungssensors umgeschaltet wird in einen Notlauf-Regelungszustand auf Basis eines stelldruckbezogenen Messwerts kann bei Ausfall des stelldruckbezogenen Sensors umgeschaltet werden in einen anderen Notlauf-Regelzustand, welcher beispielsweise basierend auf einer stellkraftbezogenen Regelgröße regeln kann. So wird eine zusätzliche Redundanz geschaffen.

Gemäß einer anderen bevorzugten Ausführung des erfindungsgemäßen Regelungsverfahrens, welche mit den vorherigen kombinierbar ist, kann eine Umschaltung in einen NotlaufSteuerungszustand erfolgen, wenn (zusätzlich) ein nicht betriebsgemäßer Zustand einer der anderen Regelgrößen als dem Stellglied-Positionsmesswert festgestellt wird, insbesondere wenn (zusätzlich) ein nicht betriebsgemäßer Zustand mehrerer oder jeder der anderen Regelgrößen als dem Stellglied-Positions-Ist-Messwert festgestellt wird. Dieses Regelungsverfahren kann also aus dem Normalbetriebszustand in einen ersten Notlauf-Regelungszustand sowie gegebenenfalls in weitere Notlauf-Regelbetriebszustände wechseln und, falls der Notlauf-Regelbetriebszustand oder die Notlauf-Regelbetriebszustände nicht durchführbar sind, weil die zugrunde gelegte Regelgröße ebenfalls nicht ordnungsgemäß erfassbar ist, unzuverlässig ist oder dergleichen, als weitere Rückfalloption in den Notlauf-Steuerungszustand wechseln. Es ist auch denkbar, dass nach dem Ausfall einer Regelung gemäß Normalbetriebszustand und dem Ausfall einer Regelung gemäß Notlauf-Regelungszustand ein Steuerungsverfahren durchgeführt wird, wie es in DE 199 21 828 A1 beschrieben ist, oder ein anderes Steuerungsverfahren.

Weitere Vorteile, Merkmale und Eigenschaften der Erfindung werden durch die folgende Beschreibung bevorzugter Ausführungen der Erfindung anhand der beiliegenden Zeichnungen verdeutlicht, in denen zeigen:

Fig. 1     eine schematische Darstellung eines elektropneumatischen Feldgeräts mit einer Regelungselektronik, die einen elektropneumatischen Wandler und einen pneumatischen Verstärker zum Betätigen des pneumatischen Antriebs aufweist und das eine Vielzahl von Sensoren zum Erfassen von Messwerten hat;

Fig. 2     eine schematische Darstellung einer Regelungselektronik gemäß einer ersten Ausführung;

Fig. 3     eine schematische Darstellung eines erfindungsgemäßen Regelungsverfahrens gemäß einer ersten Ausführung;

Fig. 4     eine schematische Darstellung einer Regelungselektronik gemäß einer zweiten Ausführung;

Fig. 5a    eine schematische Darstellung eines erfindungsgemäßen Regelungsverfahrens gemäß einer zweiten Ausführung;

Fig. 5b    eine schematische Darstellung eines erfindungsgemäßen Regelungsverfahrens gemäß einer weiteren Ausführung in einem Normalbetriebszustand;

Fig. 5c    eine schematische Ansicht des erfindungsgemäßen Regelungsverfahrens gemäß Fig. 5b in einem Notlauf-Regelungszustand;

Fig. 6     eine schematische Ansicht einer Regelungselektronik gemäß einer nicht erfindungsgemäßen Ausführung;

Fig. 7     eine schematische Darstellung eines nicht erfindungsgemäßen Regelungsverfahrens; und

Fig. 8     eine schematische Darstellung einer Regelungselektronik in einer weiteren Ausführung, die unterschiedliche Regelungen in einem Normalbetriebszustand, einem ersten Notlauf-Regelzustand, einem zweiten Notlauf-Regelzustand und einem Notlauf-Steuerungszustand gestattet.

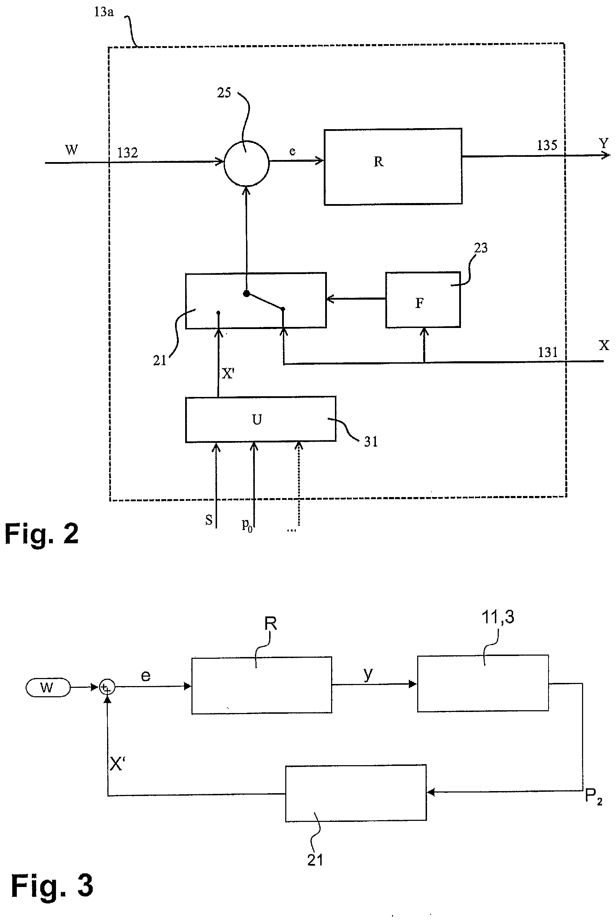

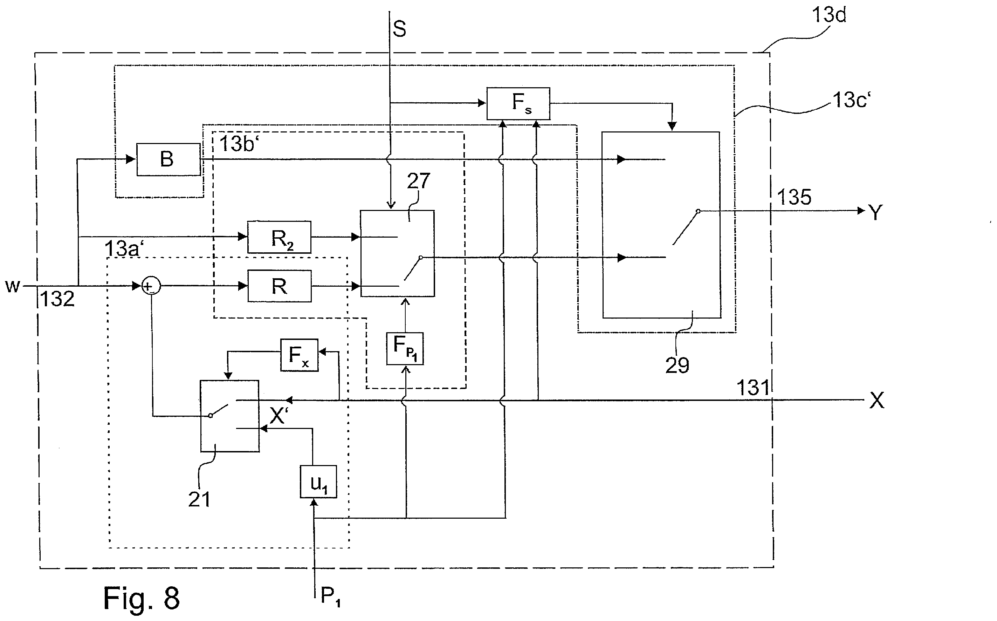

In der folgenden Beschreibung bevorzugter Ausführungen ist ein elektropneumatisches Feldgerät im Allgemeinen mit der Bezugsziffer 1 und dessen pneumatischer Stellantrieb im Allgemeinen mit der Bezugsziffer 3 versehen. Die Regelungselektronik wird im Folgenden allgemein mit der Bezugsziffer 13 versehen, wobei zu Illustrationszwecken und zur leichteren Zuordnung der Figurenbeschreibung zu der jeweiligen Figur unterschiedlich ausgeprägte Formen der Regelelektronik 13 im Einzelnen mit den Bezugsziffern 13a, 13b, 13c oder 13d bezeichnet sein können. Wie in Fig. 8 anhand der Regelungselektronik 13d illustriert, ist eine Kombination 13d unterschiedlich ausgeprägter Regelungselektronikbauarten (13a', 13b', 13c') denkbar. Abweichend von der Ausführung gemäß Fig. 8, in der die drei unterschiedlichen Aufbaukonzepte gemäß Fig. 2, 4 und 6 kombiniert sind, kann eine kombinierte Regelungselektronik durchaus auch mehrere gleich aufgebaute Regelungselektronikbaugruppen kombinieren, beispielsweise zwei oder drei Baugruppen gemäß der Stellelektronik 13a, oder mehrere Stellungsreglerbaugruppen 13b.

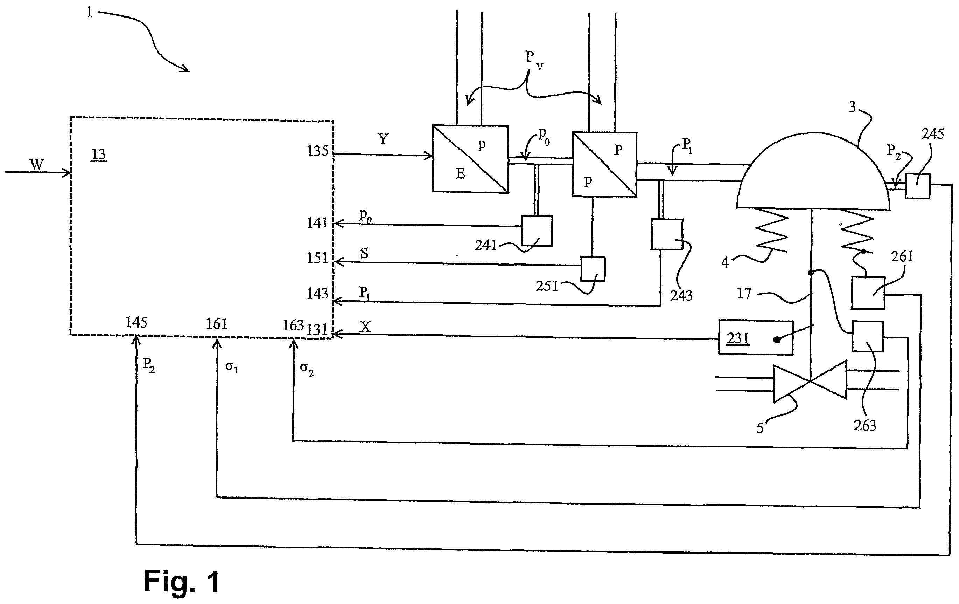

Fig. 1 zeigt schematisch ein elektropneumatisches Feldgerät 1 mit einem pneumatischen Antrieb 3 zum Betätigen eines Stellventils 5 mit Hilfe einer Stellstange 17, welche die Stellkraft von dem Stellantrieb 3 an das Ventilglied des Stellventils 5 überträgt. Der Stellungsregler 1 hat eine Stellungsreglerelektronik 13 mit einem Eingang 131 zum Empfangen des Stellglied-Positions-IST-Messwerts X von einem Stellungssensor 231. Der Stellungssensor 231 erfasst die Ist-Position der Stellstange 17 bzw. des Stellglieds des Stellventils 5 und gibt einen entsprechenden Stellglied-Positions-Ist-Messwert X an die Stellungsreglerelektronik 13 ab. Ferner weist die Stellungsreglerelektronik 13 einen Sollwerteingang 132 zum Empfangen einer Leitgröße W von einem übergeordneten Regelkreis, beispielsweise einer Leitwarte, auf.

Die Stellungsreglerelektronik 13 umfasst einen Steuersignalausgang 135 zum Abgeben einer Stellgröße Y zum Ansteuern eines elektropneumatischen Wandlers 11, welcher auf Basis einer elektrischen Stellgröße Y einen pneumatischen Stell- bzw. Steuerdruck $p_0$ erzeugt. Wie in Fig. 1 abgebildet, kann der I/P-Wandler 11 den Steuerdruck $p_0$ an einen

pneumatischen Verstärker 15 abgeben, welcher auf Basis des Steuerdrucks $p_0$ ein volumen- und/oder druckverstärktes Drucksignals $P_1$ für den pneumatischen Stellantrieb 3 abgibt. Typischerweise sind sowohl der elektropneumatische Wandler 11 als auch der Volumenstromverstärker 15 durch denselben Versorgungsdruck $P_V$ beispielsweise bis zu 10 bar versorgt und der pneumatische Verstärker 15 verstärkt den Volumenstrom, welcher dem Stellantrieb 3 zur Verfügung gestellt wird, mit im Wesentlichen demselben volumenverstärkten Stelldruck $P_1$ wie dem Steuerdruck $p_0$, den der elektropneumatische Wandler 11 ausgibt. Es sei klar, dass ein elektropneumatischer Wandler 11 ohne zwischengeschalteten Volumenstromverstärker 15 direkt den pneumatischen Stellantrieb 3 druckbeaufschlagen kann (nicht dargestellt). Ein Volumenstromverstärker kann beispielsweise dann unnötig sein, wenn das von dem elektropneumatischen Wandler unmittelbar bereitgestellte Drucksignal $p_0$ einen ausreichenden Volumenstrom für eine schnelle Betätigung eines pneumatischen Stellantriebs 3 bereitstellen kann. Volumenstromverstärker 15 werden beispielsweise für großvolumige pneumatische Stellantriebe eingesetzt.

Im Normalbetriebszustand kann das elektropneumatische Feldgerät ein Regelungsverfahren durchführen, das auf Basis des Sollsignals W und des Positions-Ist-Messwerts X anhand einer vorbestimmten Regelungsroutine die Stellgröße Y erzeugt. Mit der Stellgröße Y wird der elektropneumatische Wandler 11 angesteuert, ein Steuerdrucksignal $p_0$ zu erzeugen, um den Stellantrieb 3 zu veranlassen, eine bestimmte Ventilstellung des Stellventils 5 anzufahren. Wenn der gemessene Stellglied-Positions-Ist-Messwert X der Leitgröße W entspricht, kann beispielsweise eine Stellgröße Y ausgegeben werden, die den elektropneumatischen Wandler 11 veranlasst, einen Stelldruck $p_0$ abzugeben, der den Stelldruck $P_2$ in einer Antriebskammer des Stellantriebs 3 konstant hält, um die aktuelle Position des Stellglieds zu halten. Wenn der Regelungsalgorithmus der Regelungselektronik 13 eine Abweichung zwischen der Regelgröße X in Form des Stellglied-Positions-Ist-Messwerts und der Leitgröße W feststellt, kann auf Basis des Regelungsalgorithmus eine Stellgröße Y erzeugt werden, die den I/P-Wandler 11 dazu veranlasst, einen Steuerdruck $p_0$ abzugeben, der den Stelldruck $P_2$ in dem Antrieb 3 verändert, also beispielsweise erhöht oder verringert, um das Stellglied so zu verfahren, dass die Abweichung zwischen dem Stellglied-Positions-Ist-Messwert X und den Sollwert der Leitgröße W verringert wird.

Das Feldgerät 1 gemäß Fig. 1 hat zahlreiche Sensoren, um Ist-Messwerte bzw. Regelgrößen im Einflussbereich des Feldgeräts 1 zu erfassen. Der Positionssensor 231 zum Erfassen des Stellglied-Positions-Ist-Messwerts X wurde oben bereits beschrieben. Bei einem Feldgerät kann beispielsweise ein Steuerdrucksensor 241 am Ausgang des elektropneumatischen Wandlers 11 vorgesehen sein, um den vom elektropneumatischen Wandler 11 abgegebenen Steuerdruck $p_0$ zu messen. Falls ein pneumatischer Verstärker 15 vorhanden ist, kann in der Versorgungsleitung zwischen dem Verstärker 15 und dem pneumatischen Antrieb 3 ein Versorgungsdrucksensor 243 vorgesehen sein, um den Versorgungsdruck bzw. Steuerdruck $P_1$ zu erfassen. Ein Stelldrucksensor 245 kann in oder an dem Stellantrieb 3 vorgesehen sein, um den Stelldruck unmittelbar in einer pneumatischen Arbeitskammer eines pneumatischen Stellantriebs 3 zu erfassen. Der Stellungsregler 13 verfügt über Eingänge 141, 143, 145, um den jeweiligen Druck-Ist-Messwert, den ein Drucksensor 241, 243 oder 245 erfasst, zu empfangen.

Bei manchen pneumatischen Verstärkern 15 (beispielsweise den pneumatischen Volumenstromverstärker gemäß der deutschen Patentanmeldung DE 10 2016 100 919.9 bzw. der europäischen Patentanmeldung EP 3196483 A1 der Anmelderin oder enthält der Volumenstromverstärker mehrere Be- oder Entlüftungsventile sowie gegebenenfalls ein Verstärkungsventil, die für sich genommen oder gemeinsam mit einem Kolben beweglich gelagert sein können. An einem solchen Kolben kann eine Kolbenposition mit einem Positionssensor erfasst werden. Ein Kolbenpositionssensor 251 zur Erfassung der Kolbenstellung kann ein Kolbenpositions-Ist-Messsignal S an einem dafür vorgesehenen Eingang 151 der Stellungsreglerelektronik 13 übermitteln.

Als I/P-Wandler kann beispielsweise ein Magnetventil, etwa vom Typ 3967 der Anmelderin, optional mit einem Volumenstromverstärker, etwa vom Typ 3756 der Anmelderin, verwendet werden. Andere I/P-Wandler und/oder Volumenverstärker sind in den Patenten bzw. Anmeldungen DE 10 2006 006 585 B3, DE 195 05 233 C2 und DE 10 2007 062 207 A1 der Anmelderin beschrieben.

Messwerte, die sich direkt oder indirekt auf den Stelldruck beziehen, können stelldruckbezogene Messwerte oder stelldruckbezogene Regelgrößen genannt werden. Die oben beschriebenen Druckmesswerte $p_0$, $P_1$ und $P_2$ sowie der Verstärkerkolben-Positionsmesswert S realisieren stelldruckbezogene Messwerte.

Ein Feldgerät kann über Sensoren zum Erfassen einer mechanischen Spannung $\sigma_1$, $\sigma_2$ verfügen. Ein Span-nungssensor 261 kann beispielsweise die mechanische Spannung $\sigma_1$ an einer Rückstellfeder 4 des pneumatischen Stellantriebs erfassen. Ein Spannungssensor 263 kann die mechanische Spannung $\sigma_2$ an einer Stellstange 17 erfassen oder eine mechanische Spannung an einer Membran zwischen pneumatischer Arbeitskammer und Rückstellfeder. Anstelle einer mechanischen Spannung kann auch eine mechanische Verformung $\varepsilon_1$ bzw. $\varepsilon_2$ gemessen werden. Ein Spannungs- und/oder Dehnungssensor 261 kann an einer Rückstellfeder 4 und/oder ein anderer Spannungs- und/oder Dehnungssensor kann an der Stellstange 17 vorgesehen sein, um die Federrückstellkraft oder eine Stellkraft zu messen. Es sind auch andere Kraft- und/oder Drehmomentmesszellen denkbar, um eine Rückstellkraft oder eine Stellkraft zu erfassen. Die stellkraftbezogenen Messwerte, beispielsweise eine mechanische Spannung $\sigma_1$ oder $\sigma_2$ können an einen jeweiligen entsprechenden Eingang 161, 163 der Stellungsreglerelektronik 13 übermittelt werden.

Das Feldgerät 1 kann über weitere Sensoren zum Erfassen von beispielsweise prozessfluidbezogenen Messwerten am oder im Prozessfluidstrom stromaufwärts und/oder stromabwärts des Stellventils 5 vorgesehen sein (nicht abgebildet). Eine prozessfluidbezogene Messgröße kann unmittelbar an dem Stellventil erfasst werden, beispielsweise eine Geräuschentwicklung infolge des Öffnungszustands des Stellventils, beispielsweise von Kavitationsgeräuschen. Prozessfluidbezogene Messgrößen können beispielsweise der Druck, die Strömungsgeschwindigkeit und/oder die Temperatur des Prozessfluids stromaufwärts oder stromabwärts des Stellventils 5 sein.

Ein zentraler Gedanke der Erfindung besteht darin, dass anstelle der Messgröße bzw. Regelgröße X eine Regelung auch mit einer anderen Mess- bzw. Regelgröße ¬X als der Stellglied-Positions-Ist-Messwert X erfolgen kann, insbesondere bei Ausfall oder Defekt des Positionssensors X. Durch Verwendung einer anderen Messgröße, die oftmals ohnehin mit dem Feldgerät 1 erfasst wird, kann eine redundante Regelung erfolgen, ohne dass ein redundanter Positionssensor notwendig ist.

Fig. 2 zeigt eine erste Ausführung einer Regelungselektronik 13a zum Durchführen eines erfindungsgemäßen Regelungsverfahrens.

Die Regelungselektronik 13a verfügt über Eingänge 131, 132 für den Positions-Ist-Messwert X bzw. den Sollwert W. Ferner hat die Elektronik 13a einen Steuerausgang 135 zur Abgabe der Stellgröße Y an einen elektropneumatischen Wandler. Ferner verfügt die Elektronik 13a über weitere Eingänge für Ist-Messwerte aus dem Umfeld des Stellungsreglers, insbesondere für stelldruckspezifische Messwerte, stellkraftspezifische Messwerte und prozessfluidspezifische Messwerte.

Die Regelungselektronik 13a hat einen Reglerbaustein R zur Durchführung eines Regelungsalgorithmus auf Grundlage eines Eingangswerts e. Die Differenzwertbildung kann als Bestandteil des Regelungsalgorithmus betrachtet werden. Der Eingangswert e wird bei dem dargestellten Beispiel durch den Differenzwertbilder 25 aus dem Unterschied zwischen dem Sollwert W und dem Positions-Ist-Messwert X oder, an dessen Stelle, dem anderen Ist-Messwert ¬X zugeordneten Positionswert X' bestimmt.

Ob der Positions-Ist-Messwert X oder ein einem anderen Ist-Messwert-X zugeordneter Positionswert X' der Differenzwertbildung der Regelungsroutine R zugrunde gelegt wird, bestimmt eine Umschalteinrichtung 21. Die Umschalteinrichtung 21 erhält als Eingangsgröße einerseits den Stellglied-Positions-Ist-Messwert X und andererseits einen zugeordneten Positionswert X'. Der zugeordnete Positionswert X' wird bereitgestellt durch eine Umwandlungseinheit 31, die aus einem Ist-Messwert einen entsprechenden Positionswert zuordnet.

Beispielsweise kann für eine Zuordnung im Rahmen eines Initialisierungsvorgangs eines elektropneumatischen Stellgeräts das Stellglied einmal oder mehrfach von einer vollständig geschlossenen in eine vollständig geöffnete Position verfahren werden und während dieser Initialisierung eine Korrelation zwischen dem Stellglied-Positions-Ist-Wert und gleichzeitig erfassten Ist-Messwerten bezüglich einer stelldruckbezogenen Messgröße, einer stellkraftbezogenen Messgröße, einer prozessfluidbezogenen Messgröße oder dergleichen als Zuordnung bestimmt werden. Eine Korrelation zwischen einer beliebigen IST-Messgröße und einem Positionswert kann beispielsweise als Kennlinie oder Werteschar in der Umwandlungseinrichtung 31 hinterlegt sein. So kann beispielsweise ein Ist-Messwert beispielsweise des Steuerdrucks $p_0$ einem erfahrungsgemäß entsprechenden Positionsmesswert zugeordnet werden.

Wenn die Umschalteinrichtung 21 von dem Normalbetrieb, in dem auf Basis eines gemessenen Stellglied-Positions-Ist-Messwerts geregelt wird, umschaltet in einen Notlauf-Regelbetrieb, bei dem das Stellventil betätigt wird auf der Grundlage einer anderen Messgröße ¬X, die dann als Regelgröße fungiert, kann auf Basis der in der Umwandlungseinrichtung 31 hinterlegten Korrelation mittels eines anderen Messwerts ¬X ein zugeordneter Positionsmesswert X' ausgegeben werden, der von der Umschalteinheit 21 anstelle des Positions-Ist-Messwerts X an den Reglerbaustein R bereitgestellt wird. Der Reglerbaustein R regelt bei diesem Beispiel gemäß Figur 2 sowohl den Normalbetriebszustand als auch den Notlauf-Regelbetriebszustand auf identische Weise, wobei der Reglerbaustein die bereitgestellte Regelgröße X oder X' stets behandelt wie einen Stellglied-Positions-Ist-Messwert X. Das pneumatische Feldgerät bzw. dessen Regelungselektronik 13a kann so sowohl im Normalbetriebszustand als auch im NotlaufRegelungszustand denselben Regelungsalgorithmus durchführen.

Die Betätigung der Umschalteinrichtung 21 erfolgt in Reaktion auf den Fall eines Umschaltsignals u. Das Umschaltsignal u kann beispielsweise durch eine Fehlererkennungseinrichtung 23 ausgelöst werden, die den Stellglied-Positions-Ist-Messwert X überwacht und auf Plausibilität überprüft. Wenn die Fehlererkennungseinrichtung 23 anhand eines Fehlererkennungsalgorithmus feststellt, dass ein Positions-Ist-Messwert X fehlerhaft oder nicht plausibel ist, beispielsweise weil er die physikalisch mögliche Obergrenze eines Positionswertes überschreitet oder eine physikalisch mögliche Untergrenze eines Positionswertes unterschreitet, kann die Fehlererkennungseinrichtung 23 das Umschaltsignal ausgeben, um die Umschalteinrichtung 21 so zu betätigen, dass an den Reglerbaustein R nicht länger der Stellglied-Positions-Ist-Messwert X sondern eine andere Regelgröße ¬X übertragen wird.

Die Zuordnung von einer Regelgröße bzw. einem Ist-Messwert, beispielsweise einem stelldruckbezogenen Ist-Messwert, einem stellkraftbezogenen Ist-Messwert, einem prozessfluidbezogenen Ist-Messwert oder dergleichen, zu einem entsprechenden Positionsmesswert X' kann, wie in Fig. 2 abgebildet, so erfolgen, dass der korrelierte bzw. simulierte Positionsmesswert X' als Eingangswert der Umschalteinrichtung 21 vorgegeben wird. Es ist auch denkbar, dass die Umschalteinrichtung 21 einen ungefilterten bzw. unkorrelierten Ist-Messwert als Eingangswert empfängt und die Umwandlung erst im Anschluss an die Umschalteinrichtung erfolgt. Zu diesem Zweck kann zwischen dem Reglerbaustein R bzw. dessen Differenzwertbilder 25 und der Umschalteinheit 21 eine (nicht dargestellte) Einrichtung zur Signalumwandlung vorgesehen sein, die beispielsweise durch das Umschaltsignal u ebenfalls aktivierbar sein kann.

Ferner ist es denkbar, dass eine Umwandlungseinheit 31 einem zugeordneten Positionswert X' zur weiteren Verarbeitung durch den Reglerbaustein R ausgibt, der beispielsweise anhand einer Wertematrix einer vorbestimmten Paarung aus zwei Ist-Messwerten, beispielsweise einem stelldruckbezogenen Messwert und einem prozessfluidbezogenen Messwert, basiert.

Fig. 3 zeigt eine Regelstrecke für ein Regelungsverfahren gemäß einem Notlauf-Regelungszustand, das beispielsweise mit der Regelungselektronik 13a gemäß Fig. 2 realisierbar ist. Die Regelstrecke empfängt einen Sollwert entsprechend der Leitgröße W zum Vergleich mit dem zugeordneten Positionswert X', auf dessen Basis ein Reglerbaustein R einen Regelungsalgorithmus vollführt, um die Stellgröße Y für die Stellstrecke, die aus elektropneumatischem Wandler, gegebenenfalls Verstärker, pneumatischem Antrieb und Stellglied besteht. Aus dieser Strecke wird ein Druck-messwert, beispielsweise der Stelldruck $P_2$ im Stellantrieb 3, abgegriffen und durch die Umwandlungseinrichtung 21 beispielsweise auf Basis einer Umwandlungsfunktion U in einem dem Ist-Stelldruck ($P_2$)-Messwert zugeordneten Positionswert X' umgewandelt. Es sei klar, dass anstelle des Stelldrucks $P_2$ in der Arbeitskammer des Stellantriebs 3 alternativ eine andere Regelgröße ¬X verwendet werden kann.

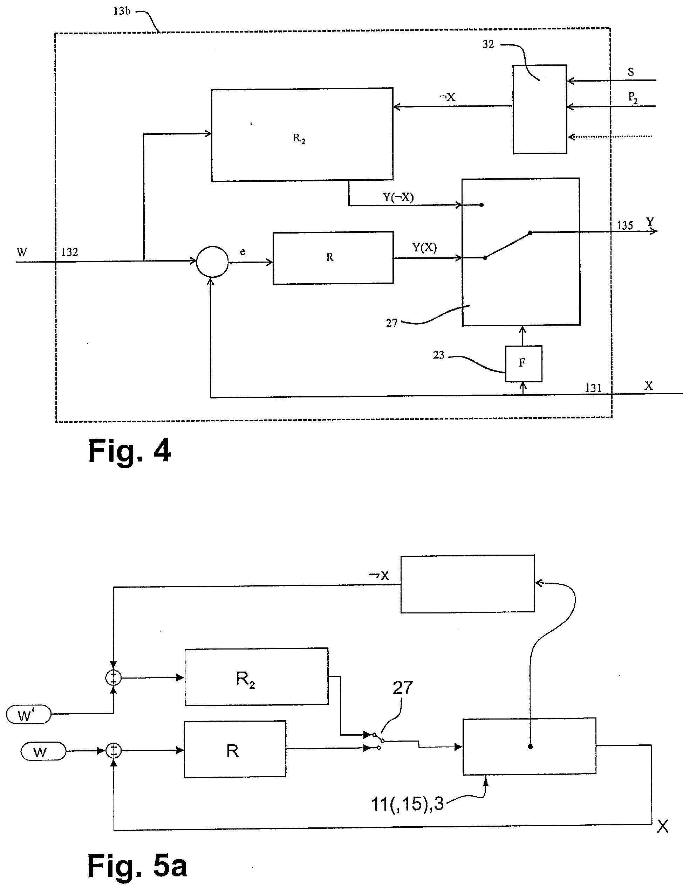

Fig. 4 zeigt eine alternative Ausgestaltung einer erfindungsgemäßen Regelungselektronik 13b zum Durchführen eines erfindungsgemäßen Regelungsverfahrens. Der wesentliche Unterschied der Elektronik 13b gegenüber der oben beschriebenen Elektronik 13a besteht darin, dass die Umschalteinheit 27 bei der Elektronik gemäß Fig. 4 als Eingangsgröße einerseits eine Stellgröße Y (X) auf Basis des Stellglied-Positions-Ist-Messwerts X und andererseits eine auf Basis einer anderen Messgröße ¬X bestimmte Stellgröße Y (¬X) erhält.

Im Normalbetriebszustand kann bei der Regelungselektronik 13b die Regelung auf Basis der gemessenen Positions-Ist-Messwerte X und des Sollwerts W ausgehend von der Leitgröße mit Hilfe eines Positions-Regelungsalgorithmus R erfolgen. Im Normalbetriebszustand wird die durch den Positions-Regelungsalgorithmus R ermittelte Stellgröße Y (X) durch die passive Umschalteinrichtung 27 an den Stellgrößenausgang 135 der Elektronik 13b übertragen und von dort aus an den elektropneumatischen Wandler weitergegeben.

Bei der Regelungselektronik 13b gemäß Fig. 4 wird ein andersartiger Notlauf-Regelungszustand aktiviert als bei der oben beschriebenen Regelungselektronik 13a. Die Regelungselektronik 13b gemäß Fig. 4 weist einen Regelungs-baustein $R_2$ zum Durchführen einer speziellen Notlauf-Regelungsroutine auf Basis der anderen Regelgröße ¬X als dem Stellglied-Positions-IST-Messwert X auf. Diese andere Regelgröße kann beispielsweise ein Ist-Messwert von einem beliebigen der in Fig. 1 beschriebenen anderen Sensoren sein, beispielsweise eine stelldruckbezogene Messgröße ($p_0$, $P_1$, $P_2$, S oder dergleichen), eine stellkraftbezogene Messgröße, eine prozessfluidbezogene Messgröße oder dergleichen.

Die Stellungsreglerelektronik 13b kann eine Umwandlungseinrichtung 32 ähnlich der oben beschriebenen Umwandlungseinrichtung 31 umfassen, braucht jedoch keine Umwandlung durchzuführen, sondern kann den anderen Messwert ¬X auch unmittelbar an den zweiten Reglerbaustein $R_2$ zum Durchführen der speziellen messgrößenabhängigen Regelungsroutine liefern.

Die Regelungsroutine $R_2$ kann basierend auf dem Leitgrößen-Sollwert W und einer anderen Regelgröße ¬X als dem Stellglied-Positions-Ist-Messwert X unmittelbar einen Wert für eine Stellgröße Y (¬X) erzeugen, und diese zum Ansteuern des elektropneumatischen Wandlers auszugeben. Im Notlauf-Regelzustand erhält die Umschalteinrichtung 27 ein Umschaltsignal u, beispielsweise von einer Fehlererkennungseinrichtung 23, das die Umschalteinrichtung 27 dazu veranlasst, Notlauf-Regelungsbetriebs-gemäß die Stellgröße Y (¬X) als Stellgröße Y an dem Stellausgang 135 für den elektropneumatischen Wandler auszugeben.

Ein schematischer Regelkreis für ein Regelungsverfahren mit einer Umschaltung zwischen einem Normalbetriebszustand und einem Notlauf-Regelungszustand wie im Hinblick auf Fig. 4 beschrieben, ist in Fig. 5a dargestellt. Im Normalbetrieb erfolgt die Regelung gemäß einer Regelungsroutine eines ersten Reglerbausteins $R_2$ auf Basis der Leitgröße W und dem Stellglied-Positionsmesswert X. Im Notlauf-Regelbetrieb kann ein spezieller Fehlerzustands-Sollwert als Leitgröße W' vorgegeben werden, falls die Verwendung einer speziellen Fehlerzustands-Leitgröße W' vorgesehen ist. Als Fehlerzustands-Leitgröße W' kann alternativ einfach die standardmäßig bereitgestellte Leitgröße W von dem übergeordneten Reglerkreis bzw. der Leitwarte verwendet werden. Die Fehlerzustands-Leitgröße W' und die sich von dem Stellglied-Positions-Ist-Messwert X unterscheidende Regelgröße ¬X werden in den Regelungsroutinen eines anderen Regelbausteins $R_2$ eingegeben, um die Stellgröße auf Basis der anderen Regelgröße ¬X und der Leitgröße W' zu bestimmen. Durch die Umschalteinrichtung 27 kann eine der beiden Stellgrößen in die Regelstrecke eingegeben werden, die den elektropneumatischen Wandler, gegebenenfalls einen pneumatischen Verstärker, den pneumatischen Antrieb und das Stellglied umfasst. Der Stellstrecke kann eine beliebige Stellgröße, beispielsweise eine stelldruckspezifische Regelgröße, eine stellkraftspezifische Regelgröße oder eine prozessfluidbezogene Regelgröße, die durch einen entsprechenden Sensor erfasst wird, als Stellglied-Positions-Ist-Messwert-fremde Regelgröße ¬X zur Regelung in einem Notlauf-Regelungszustand zugrunde gelegt werden.

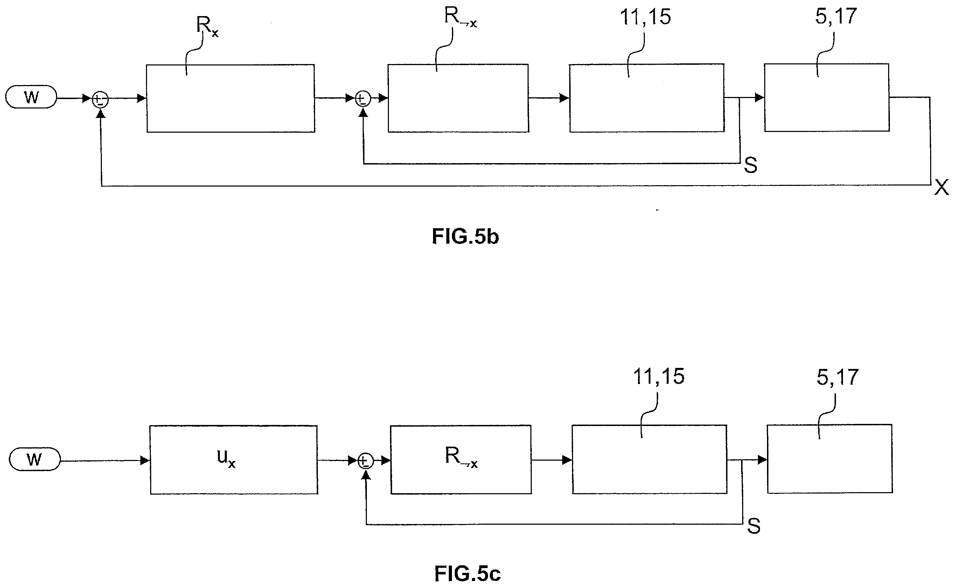

Fig. 5b und 5c zeigen in einer vereinfachten Darstellung die Regelstrecke ähnlich Fig. 5a für einen Normalbetriebszustand (Fig. 5b) und einen Notlauf-Regelungszustand (Fig. 5c). Die Regelstrecke gemäß Fig. 5b betätigt im Normalbetriebszustand den Stellantrieb auf der Grundlage des gemessenen Positions-Ist-Wertes des Stellglieds und dem Positions-Sollwert W von einer Leitwarte (nicht dargestellt). In dieser Regelstrecke wird ein elektropneumatischer Wandler mit einem Volumenstromverstärker verwendet, wobei der Volumenstromverstärker mit einem Kolbenpositionssensor ausgestattet ist, der eine Kolbenstellung eines Ventils des Volumenstromverstärkers erfasst und an eine Regelungselektronik zurückgeben kann.

Wenn die Messung der Stellglied-Ist-Position X ausfällt oder der Sensor ersichtlich unzuverlässige Werte liefert, kann auf den Notlauf-Regelzustand gemäß Fig. 5c umgeschaltet werden, bei dem eine mittelbare Regelung anhand der gemessenen Verstärkerkolbenposition S erfolgt. Die Notlauf-Regelung gemäß Fig. 5c kann basieren auf einem Leitsignal W, das in dem Notlauf-Regelungszustand durch eine Umwandlungsroutine $U_X$ umgewandelt wird in ein Notlauf-Leitsignal W', welches zusammen mit dem Verstärkerkolben-Positions-Ist-Messwert S der Regelungsroutine $R_{\neg X}$ zugrunde gelegt wird.

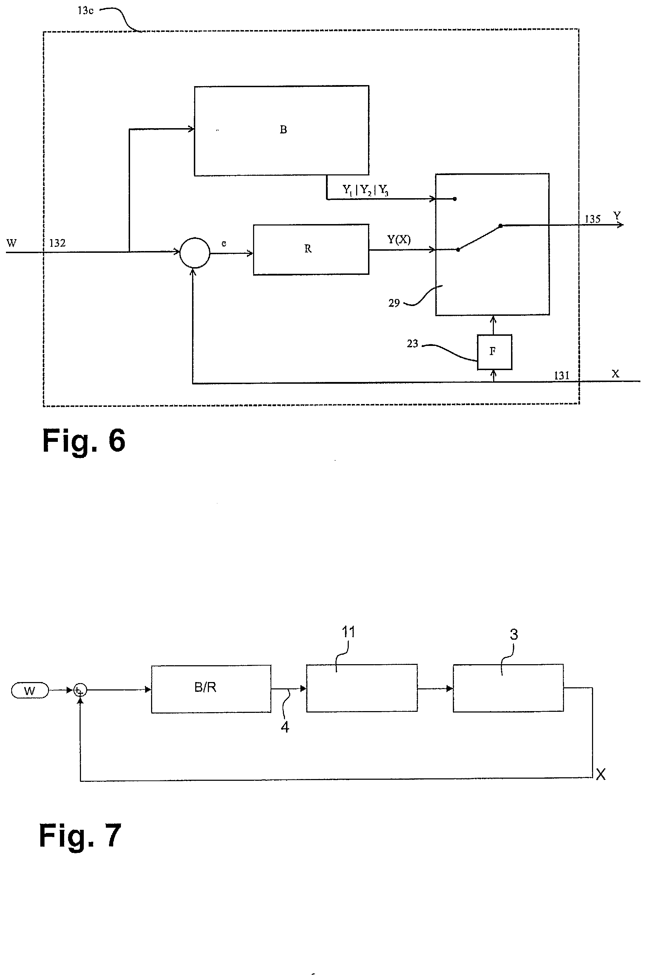

Fig. 6 zeigt eine nicht erfindungsgemäße Regelungselektronik 13c, bei der die Umschaltung mit der Umschalteinrichtung 29* ähnlich der der Regelungselektronik 13b ausgangsseitig vor dem Stellenausgang 135 erfolgt. Ähnlich wie oben beschrieben kann die Umschalteinrichtung infolge einer Fehlererkennungseinrichtung 23 aus einem Normalbetriebszustand in einen Notlaufbetriebszustand, der bei Fig. 6 als Notlauf-Steuerungszustand realisiert ist, wechseln. Die Regelung im Normalbetrieb erfolgt bei der Elektronik 13c gemäß Fig. 6 genau wie bei der Elektronik 13b, die oben hinsichtlich Fig. 4 beschrieben ist. Im Notlauf-Steuerzustand kann eine Steuerung einzig auf Basis des dem Sollwert-Eingang der Elektronik 13c zugeführten Leitsignals W erfolgen.

Bei einem Steuerungsverfahren wird die Stellgröße durch den Steuerbaustein B auf Basis der Leitgröße W und einer vorbestimmten Vergleichsgröße bestimmt. Die Vergleichsgröße kann beispielsweise bezogen sein auf einen zulässigen Leitgrößenbereich, beispielsweise 4..20 mA und kann insbesondere ein mittlerer zulässiger Leitgrößen-Vergleichswert sein, beispielsweise 12 mA. Wenn die am Solleingang 132 anliegende Leitgröße W kleiner ist als die Vergleichsgröße, kann die Steuerung einen Stellwert $Y_1$ ausgeben, der den elektropneumatischen Wandler beispielsweise zum Entlüften des pneumatischen Stellantriebs veranlasst. Wenn die Leitgröße W größer ist als der Vergleichswert, kann der Steueralgorithmus des Steuerbausteins B einen Stellwert $Y_2$ ausgeben, welcher den elektropneumatischen Wandler dazu veranlasst, den Druck in dem pneumatischen Stellantrieb zu erhöhen. Ist die Leitgröße W identisch mit dem Vergleichswert oder liegt zumindest innerhalb eines Toleranzbereichs um eine Vergleichsgröße, so kann die Steuerungsroutine des Steuerbausteins B eine Stellgröße $Y_3$ ausgeben, die den elektropneumatischen Wandler dazu veranlasst, den Stellantrieb mit einem mittleren Stelldruck zu beaufschlagen oder den aktuellen Stelldruck beizubehalten.

Der in Fig. 7 dargestellte nicht erfindungsgemäße Regelkreis hat ein Regelverfahren, das in einem normalen Betriebszustand beispielsweise von der Elektronik 13c gemäß Fig. 6 vollführt werden kann. Demnach liegt eingangs ein Sollsignal W an, das zusammen mit dem gemessenen Stellglied-Positions-Ist-Messwert X einer Regelung mit dem Reglerbaustein R zugrunde gelegt werden kann, um ein Stellsignal Y für einen elektropneumatischen Wandler zu betätigen. Der Wandler gibt einen Stelldruck an, um den pneumatischen Stellantrieb 3 zu betätigen, der das Stellglied manipuliert. Bei einem Ausfall des Positionssensors, welcher in intaktem Zustand den Stellglied-Positions-Ist-Messwert X ausgibt, kann eine Umschaltung erfolgen zu einer Steuerung auf Basis des Sollwertes W mit Hilfe einer Steuerungsroutine eines Steuerblocks B.

Fig. 8 zeigt eine Regelungselektronik, bei der mehrere umschaltbare Regelungen kaskadenartig in Reihe geschaltet sind. Wie durch die strichlierten Gruppierungen skizzenhaft dargestellt, setzt sich die Regelungselektronik 13b zusammen aus mehreren Baugruppen 13a', 13b' und 13c', die im Wesentlichen den oben beschriebenen Regelungsbaugruppen 13a bzw. 13b bzw. 13c entsprechen.

Eine erste Umschaltgruppe 13a' erlaubt ähnlich der Regelungselektronik 13a gemäß Fig. 2 eine Umschaltung zwischen einer Regelung, die auf einem Stellglied-Positions-Ist-Messwert X basiert, und einer Regelung auf Basis einer anderen Messgröße, hier der Druck-Ist-Messgröße, die exemplarisch mit dem Ist-Steuerdruck $P_1$ angegeben ist, der zwischen dem Volumenstromverstärker 15 und der Arbeitskammer des pneumatischen Antriebs 4 messbar ist. Unabhängig von der Ist-Messgröße X oder $P_1$ wird derselbe Reglerbaustein R mit derselben Regelungsroutine zur Erzeugung eines Stellsignals Y verwendet. Dabei erfolgt eine Umwandlung ausgehend von dem tatsächlich gemessenen Druck-Ist-Messwert $P_1$ an einem Volumenstromverstärker-Ausgang mit Hilfe einer Umrechnungseinheit $U_1$ in eine zugeordnete Positions-Messgröße X'. Die Umschalteinheit 21 gibt im Normalbetriebszustand die tatsächliche Positions-Ist-Messgröße X und beim Erkennen einer fehlerhaften Positionsmessung durch die Fehlererkennungseinrichtung $F_X$ die zugeordnete Positionsgröße X' an den Reglerbaustein R weiter.

Die zweite Umschaltbaugruppe 13b' arbeitet im Wesentlichen der oben beschriebenen Regelungselektronik 13b, indem von der zweiten Umschalteinrichtung 27 entweder ein von einem ersten Regelungsalgorithmus erzeugtes Stellsignal oder ein von einem anderen Regelungsalgorithmus erzeugtes Stellsignal in Richtung des Stellausgangs 135 weitergegeben wird. Bei dem in Fig. 8 abgebildeten Beispiel erfolgt die Umschaltung von dem ersten Regelungsalgorithmus R zu dem anderen Regelungsalgorithmus $R_2$, wenn eine Fehlererkennungseinrichtung $F_{P_1}$ ein fehlerhaftes

Verhalten sowohl des Positions-Ist-Messwerts X als auch des Stelldruck-Ist-Messwerts $P_1$ erkennt. Die Umschaltung schaltet dann in einen anderen Notlauf-Regelungszustand über, in dem eine Regelung mit dem Regelbaustein $R_2$ anhand eines Regelungsalgorithmus vorgenommen wird, der auf der Leitgröße W und einer wiederum anderen Regelgröße basiert, die in dem in Fig. 8 abgebildeten Beispiel exemplarisch als die Verstärkerventil-Kolbenstellung S angegeben ist.

Die Regelungselektronik 13d umfasst ferner eine dritte Umschaltbaugruppe 13c', die im Wesentlichen der Regelungselektronik 13c gemäß Fig. 6 entspricht, wobei eine Umschaltung zwischen einem Regelungszustand, der in Fig. 8 bereits ein Notlauf-Regelungszustand ist, in einem Notlauf-Steuerungszustand erfolgen kann. Die Umschaltung erfolgt mit Hilfe der Schalteinrichtung 29, wenn von einer Fehlererkennungseinrichtung $F_S$ ein Fehlverhalten sowohl der Ist-Positionsmessgröße X des Stellglieds, des Stelldruck-Ist-Messwerts $P_1$ als auch des Verstärkerkolben-Positionsmesswerts S erkannt wird.

Es sei klar, dass die in Fig. 2, 4, 6 und 8 als einzelne Bauteile dargestellten Einrichtungen bzw. Bausteine als einzelne elektrische Schaltungen, beispielsweise analoge Schaltungen, realisiert sein können. Es ist ebenfalls denkbar, dass die elektronischen Bausteine bzw. Einrichtungen bei der Regelungselektronik 13, 13a, 13b, 13c oder 13d teilweise oder vollständig integriert, beispielsweise in einem Mikrocontroller, einem Mikroprozessor, oder dergleichen, realisiert sind. Insbesondere die Reglerbausteine $R_1$ und $R_2$ können durch denselben Mikroprozessor realisiert sein, der zur Berechnung einer Stellgröße unterschiedliche Regelungsroutinen verwenden kann.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

Bezugszeichenliste

| | |
|---|---|
| 1 | Feldgerät |
| 3 | Stellantrieb |
| 4 | Rückstellfeder |
| 5 | Stellventil |
| 11 | Wandler |
| 13, 13a, 13b, 13c, 13d | Steuerungs- und/oder Regelungselektronik |
| 15 | Verstärker |
| 17 | Stellstange |
| 21, 27 | Umschalteinrichtung |
| 23 | Fehlererkennungseinrichtung |
| 25 | Differenzwertbilder |
| 29 | Schalteinrichtung |
| 31, 32 | Umwandlungseinrichtung |
| 131, 132, 141, 143, 145, 151 | Eingang |
| 133 | Sollwerteingang |
| 135 | Steuersignalausgang |
| 231 | Stellungssensor |
| 241, 243, 245 | Drucksensor |
| 251 | Kolbenpositionssensor |
| 261, 263 | Spannungs- und/oder Dehnungssensor |

| | |
|---|---|
| B | Steuerbaustein |
| $p_0, P_1, P_2$ | Steuerdruck |
| $P_V$ | Versorgungsdruck |
| $R, R_1, R_2$ | Regelungsroutine |
| S | Kolbenposition |
| $U_X$ | Umwandlungsroutine |
| W, W' | Leitgröße |
| X | Positions-IST-Messwert |
| ¬X | andere Regelgröße |
| X' | zugeordneter Positionsmesswert |
| $Y, Y_1, Y_2, Y_3$ | Stellgröße |
| $\varepsilon_1, \varepsilon_2$ | Verformung |

$\sigma_1, \sigma_2$     Spannung

**Patentansprüche**

1. Regelungsverfahren, für ein elektropneumatisches Feldgerät (1), umfassend

- einen pneumatischen Stellantrieb (3) zum Betätigen eines Stellglieds, wie ein Stellventil (5),
- einen elektropneumatischen Wandler (11) zum Erzeugen eines pneumatischen Stellsignals (p, P) für den pneumatischen Stellantrieb (3) und
- eine Regelungselektronik (13) mit einem elektrischen Sollwert-Eingang für eine Leitgröße (W) zur Vorgabe eines Sollwerts insbesondere von einer Leitwarte und einem elektrischen Ausgang für eine Stellgröße (Y) zum Ansteuern des elektropneumatischen Wandlers (11),

**dadurch gekennzeichnet, dass**

in einem Notlaufregelungszustand des Feldgeräts die Stellgröße (Y, Y(¬X)) bestimmt wird durch einen Regelungsalgorithmus basierend auf der Leitgröße (W) und einer anderen Regelgröße (¬X ) anstelle des Stellglied-Positions-Ist-Messwerts (X).

2. Regelungsverfahren nach Anspruch 1, **dadurch gekennzeichnet, dass** in dem Notlaufregelungszustand die Stellgröße (Y) bestimmt wird durch den Regelungsalgorithmus basierend auf der Leitgröße (W) und auf einer stelldruckbezogenen Regelgröße, wie ein Stelldruck-IST-Messwert ($p_0$, $P_1$, $P_2$) oder ein Pneumatikverstärker (15)-Kolben-Positionsmesswert (S), und/oder einer stellkraftbezogenen Regelgröße, wie ein Spannungs- und/oder Dehnungsmesswert ($\sigma_1$, $\varepsilon_1$) einer Rückstellfeder des pneumatischen Stellantrieb (3), ein Spannungs- und/oder Dehnungsmesswert ($\sigma_2$, $\varepsilon_2$) einer Antriebsstange (17) oder -welle des pneumatischen Stellantrieb (3).

3. Regelungsverfahren für ein elektropneumatisches Feldgerät (1), umfassend

- einen pneumatischen Stellantrieb (3) zum Betätigen eines Stellglieds, wie ein Stellventil (5),
- einen elektropneumatischen Wandler (11) zum Erzeugen eines pneumatischen Stellsignals (p, P) für den pneumatischen Stellantrieb (3) und
- eine Regelungselektronik (13) mit einem elektrischen Sollwert-Eingang für eine Leitgröße (W) zur Vorgabe eines Sollwerts insbesondere von einer Leitwarte und einem elektrischen Ausgang für eine Stellgröße (Y) zum Ansteuern des elektropneumatischen Wandlers (11),

**dadurch gekennzeichnet, dass**
in einem vorbestimmten Betriebszustand des Feldgeräts, wie beispielsweise einem Notlaufregelungszustand, die Stellgröße (Y, Y(¬X)) bestimmt wird durch einen Regelungsalgorithmus basierend auf der Leitgröße (W) und einer anderen Regelgröße (¬X ) anstelle des Stellglied-Positions-Ist-Messwerts (X), wobei die andere Regelgröße (¬X ) eine prozessfluidbezogene Regelgröße, wie ein stromaufwärtiger Druck und/oder ein stromabwärtiger Druck, eine Prozessfluid-Strömungsgeschwindigkeit, insbesondere stromauf und/oder stromab des Stellglieds, oder ein Geräusch, insbesondere ein Kavitationsgeräusch, am Stellglied ist.

4. Regelungsverfahren nach einem der Ansprüche 1 bis 3, **dadurch gekennzeichnet, dass** eine Reihe von vorbestimmten Regelgröße-Messwerten je einem Stellglied-Positions-Messwert (X', X") zugeordnet wird, und dass in dem vorbestimmten Betriebszustand oder dem Notlaufregelungszustand abhängig von einem durch einen Sensor des Feldgeräts erfassten Regelgrößen-Ist-Messwert der zugeordnete Stellglied-PositionsMesswert (X', X") anstelle eines Stellglied-Positions-Ist-Messwerts (X) einem Regelungsalgorithmus bereitgestellt wird, der dazu eingerichtet ist, die Stellgröße (Y) basierend auf der Leitgröße (W) und dem Stellglied-Positions-Ist-Messwert (X) zu bestimmen.

5. Regelungsverfahren nach Anspruch 4, **dadurch gekennzeichnet, dass** der Reihe von vorbestimmten Regelgröße-Messwerten je ein Stellglied-Positions-Messwert (X', X") als Kennlinie, ventilcharakteristische Funktion oder Werteschar, zugeordnet wird.

6. Regelungsverfahren nach Anspruch 4 oder 5, **dadurch gekennzeichnet, dass** die Zuordnung von je einem Stellglied-Positions-Messwert (X', X") zu der Reihe von vorbestimmten Regelgröße-Messwerten aktualisiert wird, beispielsweise bei einem Initialisierungsvorgang des Feldgeräts und/oder insbesondere während des Betriebs des Feldgeräts vorzugsweise wiederholt nach einem vorbestimmten Zeitabstand, wobei insbesondere bei wiederholter Zuordnung eine Zuordnungs-Mittelwertbildung durchgeführt wird.

7. Regelungsverfahren nach einem der Ansprüche 1 oder 2, wobei als andere Regelgröße (¬X) der Pneumatikverstärker (15)-Kolben-Positionsmesswert (S) verwendet wird, **dadurch gekennzeichnet, dass**

   - eine Vergleichsgröße, insbesondere ein Schwellenwert, vordefiniert wird und
   - die Stellgröße (Y) derart eingestellt wird, dass der Pneumatikverstärker (15)-Kolben sich in Richtung 0% Öffnung bewegt, falls die Leitgröße (W) kleiner als die Vergleichsgröße ist, und/oder
   - die Stellgröße (Y) derart eingestellt wird, dass der Pneumatikverstärker (15)-Kolben sich in Richtung 100% Öffnung bewegt, falls die Leitgröße (W) größer als die Vergleichsgröße ist, und/oder
   - die Stellgröße (Y) derart eingestellt wird, dass der Pneumatikverstärker (15)-Kolben stillsteht, falls die Leitgröße (W) der Vergleichsgröße entspricht.

8. Regelungsverfahren für ein elektropneumatisches Feldgerät (1) nach einem der vorstehenden Ansprüche, wobei in einem Normalbetriebszustand des Feldgeräts die Stellgröße (Y) bestimmt wird durch einen Regelungsalgorithmus basierend auf der Leitgröße (W) und dem Stellglied-Positions-Ist-Messwert (X), dadurch **gekennzei chnet**, dass eine Umschaltung in den vorbestimmten Betriebszustand, insbesondere den Notlaufregelungszustand, erfolgen kann.

9. Regelungsverfahren nach Anspruch 8, **dadurch gekennzeichnet, dass** eine Umschaltung erfolgt, wenn ein nicht betriebsgemäßer Zustand, insbesondere eines Sensors zum Erfassen einer Regelgröße, vorzugsweise des Stellglied-Positions-Ist-Messwerts (X), festgestellt wird.

10. Regelungsverfahren nach Anspruch 8 oder 9, **dadurch gekennzeichnet, dass** eine Umschaltung in einen anderen Notlaufregelungszustand erfolgt, wenn ein nicht betriebsgemäßer Zustand der anderen Regelgröße als dem Stellglied-Positions-Ist-Messwert (X) festgestellt wird.

11. Regelungsverfahren nach einem der Ansprüche 8 bis 10, dadurch **gekennzeichn et**, dass eine Umschaltung in einen Notlaufsteuerungszustand erfolgt, wenn ein nicht betriebsgemäßer Zustand, der anderen, insbesondere mehrerer oder jeder der anderen, Regelgröße als dem Stellglied-Positions-Ist-Messwert (X) festgestellt wird.

## Claims

1. Control method for an electropneumatic field device (1), comprising

   - a pneumatic actuating drive (3) for actuating an actuating element, such as a control valve (5),
   - an electropneumatic transducer (11) for generating a pneumatic actuating signal (p, P) for the pneumatic actuating drive (3), and
   - control electronics (13) with an electrical setpoint value input for a control variable (W) for specifying a setpoint value, in particular from a control room, and an electrical output for a manipulated variable (Y) for actuating the electropneumatic transducer (11),

   **characterized in that**
   in an emergency control state of the field device, the manipulated variable (Y, Y(¬X)) is determined by a control algorithm based on the control variable (W) and another controlled variable (¬X) instead of the actuating element position actual measured value (X).

2. Control method according to Claim 1, **characterized in that** in the emergency control state, the manipulated variable (Y) is determined by the control algorithm based on the control variable (W) and on an actuating-pressure-related controlled variable, such as an actuating-pressure actual measured value ($p_0$, $P_1$, $P_2$) or a pneumatic booster (15) piston position measured value (S), and/or an actuating-force-related controlled variable, such as a stress and/or strain measured value ($\sigma_1$, $\varepsilon_1$) of a restoring spring of the pneumatic actuating drive (3), a stress and/or strain measured value ($\sigma_2$, $\varepsilon_2$) of a drive rod (17) or drive shaft of the pneumatic actuating drive (3).

3. Control method for an electropneumatic field device (1), comprising

   - a pneumatic actuating drive (3) for actuating an actuating element, such as a control valve (5),
   - an electropneumatic transducer (11) for generating a pneumatic actuating signal (p, P) for the pneumatic actuating drive (3), and

- control electronics (13) with an electrical setpoint value input for a control variable (W) for specifying a setpoint value, in particular from a control room, and an electrical output for a manipulated variable (Y) for actuating the electropneumatic transducer (11),

**characterized in that**
in a predetermined operating state of the field device, such as, for example, an emergency control state, the manipulated variable (Y, Y(¬X)) is determined by a control algorithm based on the control variable (W) and another controlled variable (¬X) instead of the actuating element position actual measured value (X), wherein the other controlled variable (¬X) is a process-fluid-related controlled variable, such as an upstream pressure and/or a downstream pressure, a process-fluid flow velocity, in particular upstream and/or downstream of the actuating element, or a noise, in particular a cavitation noise, on the actuating element.

4. Control method according to one of Claims 1 to 3, **characterized in that** a series of predetermined controlled variable measured values is assigned in each case to an actuating element position measured value (X', X"), and **in that**, in the predetermined operating state or the emergency control state, depending on a controlled variable actual measured value detected by a sensor of the field device, the assigned actuating element position measured value (X', X") is provided instead of an actuating element position actual measured value (X) to a control algorithm which is set up to determine the manipulated variable (Y) based on the control variable (W) and the actuating element position actual measured value (X).

5. Control method according to Claim 4, **characterized in that** a respective actuating element position measured value (X', X") is assigned to the series of predetermined controlled variable measured values as a characteristic curve, valve-characteristic function or set of values.

6. Control method according to Claim 4 or 5, **characterized in that** the assignment of a respective actuating element position measured value (X', X") to the series of predetermined controlled variable measured values is updated, for example in the case of an initialization process of the field device and/or in particular during the operation of the field device, preferably repeatedly after a predetermined time interval, an assignment averaging being carried out in particular in the case of repeated assignment.

7. Control method according to either of Claims 1 and 2, wherein the pneumatic booster (15)-piston position measured value (S) is used as another controlled variable (X), **characterized in that**

- a comparison variable, in particular a threshold value, is predefined, and
- the manipulated variable (Y) is set in such a way that the pneumatic booster (15) piston moves in the direction of 0% opening, if the control variable (W) is smaller than the comparison variable, and/or
- the manipulated variable (Y) is set in such a way that the pneumatic booster (15) piston moves in the direction of 100% opening, if the control variable (W) is larger than the comparison variable, and/or
- the manipulated variable (Y) is set in such a way that the pneumatic booster (15) piston stands still if the control variable (W) corresponds to the comparison variable.

8. Control method for an electropneumatic field device (1) according to one of the preceding claims, wherein, in a normal operating state of the field device, the manipulated variable (Y) is determined by a control algorithm based on the control variable (W) and the actuating element position actual measured value (X),
**characterized in that**
a switchover to the predetermined operating state, in particular the emergency control state, can take place.

9. Control method according to Claim 8, **characterized in that** a switchover takes place if a non-operational state, in particular of a sensor for detecting a controlled variable, preferably of the actuating element position actual measured value (X), is established.

10. Control method according to Claim 8 or 9, **characterized in that** a switchover to another emergency control state takes place if a non-operational state of the controlled variable other than the actuating element position actual measured value (X) is established.

11. Control method according to one of Claims 8 to 10, **characterized in that** a switchover to an emergency control state takes place if a non-operational state of the other controlled variable, in particular of a plurality of controlled variables or of each of the other controlled variables, is established as the actuating element position actual measured value (X).

**Revendications**

1. Procédé de régulation, destiné à un équipement de terrain (1), électropneumatique, comprenant

   - un servomoteur (3) pneumatique, destiné à manœuvrer un actionneur, comme une vanne de commande (5),
   - un convertisseur (11) électropneumatique, destiné à générer un signal de commande (p, P) pneumatique pour le servomoteur (3) pneumatique et
   - un système électronique (13) de régulation, doté d'une entrée électrique de valeur de consigne pour une grandeur de référence (W), pour la prescription d'une valeur de consigne, notamment par un poste de contrôle et d'une sortie électrique pour une grandeur de commande (Y), pour l'actionnement du convertisseur (11) électropneumatique,

   **caractérisé en ce que**
   dans un état de régulation d'urgence de l'équipement de terrain, la grandeur de commande (Y, Y (¬X)) est déterminée par un algorithme de régulation, sur la base de la grandeur de référence (W) et d'une autre grandeur de réglage (¬X), en remplacement de la valeur de mesure réelle de la position (X) de l'actionneur.

2. Procédé de régulation selon la revendication 1, **caractérisé en ce que** dans l'état de régulation d'urgence, la grandeur de commande (Y) est déterminée par l'algorithme de régulation, sur la base de la grandeur de référence (W) et d'une grandeur de réglage rapportée à la pression de commande, comme une valeur de mesure réelle ($p_0$, $P_1$, $P_2$) de la pression de commande ou une valeur de position (S) de piston d'amplificateur pneumatique (15) et / ou d'une grandeur de commande rapportée à la force de réglage, comme une valeur de mesure de la tension et / ou de la dilatation ($\sigma_1$, $\varepsilon_1$) d'un ressort de rappel du servomoteur (3) pneumatique, une valeur de mesure de la tension et / ou de la dilatation ($\sigma_2$, $\varepsilon_2$) d'une tringle (17) ou d'un arbre d'entraînement du servomoteur (3) pneumatique.

3. Procédé de régulation, destiné à un équipement de terrain (1) électropneumatique, comprenant

   - un servomoteur (3) pneumatique, destiné à manœuvrer un actionneur, comme une vanne de commande (5),
   - un convertisseur (11) électropneumatique, destiné à générer un signal de commande (p, P) pneumatique pour le servomoteur (3) pneumatique et
   - un système électronique (13) de régulation, doté d'une entrée électrique de valeur de consigne pour une grandeur de référence (W), pour la prescription d'une valeur de consigne, notamment un poste de contrôle et d'une sortie électrique pour une grandeur de commande (Y), pour l'actionnement du convertisseur (11) électropneumatique,

   **caractérisé en ce que**
   dans un état de service prédéfini de l'équipement de terrain, comme par exemple un état de régulation d'urgence, la grandeur de commande (Y, Y(¬X)) est déterminée par un algorithme de régulation sur la base de la grandeur de référence (W) et d'une autre grandeur de réglage (¬X), en remplacement de la valeur de mesure réelle de la position (X) de l'actionneur, l'autre grandeur de réglage (¬X) étant une grandeur de réglage rapportée au fluide de processus, , comme une pression en amont et / ou une pression en aval, une vitesse d'écoulement du fluide de processus, notamment en amont et / ou en aval de l'actionneur ou un bruit, notamment un bruit de cavitation sur l'actionneur.

4. Procédé de régulation selon l'une quelconque des revendications 1 à 3, **caractérisé en ce qu'**une série de valeurs de mesure prédéfinies de la grandeur de commande est associée à chaque fois une valeur de mesure de la position (X', X") de l'actionneur et **en ce que** dans l'état de service prédéfini ou dans l'état de régulation d'urgence, en fonction d'une valeur de mesure réelle de grandeurs de réglage détectée par un capteur de l'équipement de terrain, en remplacement d'une valeur mesurée réelle de la position (X) de l'actionneur, la valeur mesurée de la position (X', X") de l'actionneur associée est mise à disposition d'un algorithme de régulation, qui est configuré pour déterminer la grandeur de commande (Y) sur la base de la grandeur de référence (W) et de la valeur mesurée réelle de la position (X) de l'actionneur.

5. Procédé de régulation selon la revendication 4, **caractérisé en ce qu'**à la série valeurs de mesure de grandeurs de réglage prédéfinie est associée pour chaque fois une valeur de mesure de la position (X', X") de l'actionneur en tant que courbe caractéristique, de fonction caractéristique de soupape ou de groupe de valeurs.

6. Procédé de régulation selon la revendication 4 ou 5, **caractérisé en ce que** l'association de chaque fois une valeur de mesure de la position (X', X") de l'actionneur à la série de valeurs mesurées réelles de la grandeur de réglage est mise à jour, par exemple lors d'une opération d'initialisation de l'équipement de terrain et / ou notamment pendant le service de l'équipement de terrain, de préférence de manière réitérée, après un intervalle de temps prédéfini, notamment lors d'une association réitérée, étant procédé à la création d'une valeur moyenne de d'association.

7. Procédé de régulation selon l'une quelconque des revendications 1 ou 2, en tant qu'autre grandeur de commande (¬X) étant utilisée la valeur de position (S) de piston d'amplificateur pneumatique (15), **caractérisé en ce**

- **qu'**une grandeur de comparaison, notamment une valeur seuil est prédéfinie et
- la grandeur de commande (Y) est réglée de telle sorte, que le piston de l'amplificateur pneumatique (15) se déplace en direction de 0 % d'ouverture, dans le cas où la grandeur de référence (W) est inférieure à la grandeur de comparaison, et / ou
- la grandeur de commande (Y) est réglée de telle sorte, que le piston de l'amplificateur pneumatique (15) se déplace en direction de 100 % d'ouverture, dans le cas où la grandeur de référence (W) est supérieure à la grandeur de comparaison, et / ou
- la grandeur de commande (Y) est réglée de telle sorte, que le piston de l'amplificateur pneumatique (15) reste à l'arrêt, dans le cas où la grandeur de référence (W) correspond à la grandeur de comparaison.

8. Procédé de régulation destiné à un équipement de terrain (1) électropneumatique selon l'une quelconque des revendications précédentes, dans un état de service normal de l'équipement de terrain, la grandeur de commande (Y) étant déterminée par un algorithme de régulation sur la base de la grandeur de référence (W) et de la valeur de mesure réelle de la position (X) de l'actionneur, **caractérisé en ce qu'**une commutation dans l'état de service prédéfini, notamment dans l'état de régulation d'urgence peut avoir lieu.

9. Procédé de régulation selon la revendication 8, **caractérisé en ce qu'**une commutation a lieu lorsqu'un état de service non conforme, notamment d'un capteur destiné à détecter une grandeur de réglage, de préférence la valeur de mesure réelle de la position (X) de l'actionneur est constatée.

10. Procédé de régulation selon la revendication 8 ou 9, **caractérisé en ce qu'**une commutation dans un autre état de régulation d'urgence a lieu lorsqu'un état de service non conforme de l'autre grandeur de réglage que la valeur de mesure réelle de la position (X) de l'actionneur est constatée.

11. Procédé de régulation selon l'une quelconque des revendications 8 à 10, **caractérisé en ce qu'**une commutation dans un état de régulation d'urgence a lieu, lorsqu'un état de service non conforme des autres, notamment de plusieurs ou de chacune des autres grandeurs de réglage que la valeur de mesure réelle de la position (X) de l'actionneur est constatée.

Fig. 1

**Fig. 2**

**Fig. 3**

# Fig. 4

# Fig. 5a

EP 3 537 244 B1

FIG.5b

FIG.5c

13c

B

$Y_1 | Y_2 | Y_3$

W    132

e

R

Y(X)

135    Y

29

23    F

131    X

# Fig. 6

W

B/R

11

3

4

X

# Fig. 7

Fig. 8

EP 3 537 244 B1

**EP 3 537 244 B1**

**IN DER BESCHREIBUNG AUFGEFÜHRTE DOKUMENTE**

**In der Beschreibung aufgeführte Patentdokumente**

- DE 19921828 A1
- CA 2589386 A1
- DE 102016100919
- EP 3196483 A1
- DE 102006006585 B3
- DE 19505233 C2
- DE 102007062207 A1